# FASCICULE DE BREVET EUROPEEN

(11) **EP 1 165 736 B1**
(45) Date de publication et mention de la délivrance du brevet: **14.05.2003**
(21) Numéro de dépôt: 00912719.2
(22) Date de dépôt: 20.03.2000
(51) Int. Cl.: C11D 3/37, C08G 69/40

(54) **UTILISATION DE COPOLYMERES DERIVES DE POLYAMIDES EN TANT QUE GELIFIANTS DE COMPOSES PEU POLAIRES**
VERWENDUNG VON COPOLYMEREN ABGELEITET VON POLYAMIDEN ALS GELIERMITTEL FÜR WENIG POLARE VERBINDUNGEN
USE OF COPOLYMERS DERIVED FROM POLYAMIDES AS GELLING AGENTS FOR COMPOUNDS WITH LOW POLARITY

(30) Priorité: 19.03.1999 FR 9903453
(43) Date de publication de la demande: 02.01.2002
(73) Titulaire: RHODIA CHIMIE, 92408 Courbevoie Cédex (FR)
(72) Inventeur: CANIVENC, Edith, F-69008 Lyon (FR); PERIER, Marie-Eve, F-69009 Lyon (FR); BODRERO, Sylvie, F-69230 Saint-Genis-Laval (FR); MORVAN, Mikel, F-92400 Courbevoie (FR); LAGRANGE, Jean-Paul, F-69005 Lyon (FR)
(74) Mandataire: Wattremez, Catherine
(86) Numéro de dépôt international: FR0000687
(87) Numéro de publication internationale: WO00056852

(56) Documents cités:
- US-A- 4 521 330
- US-A- 4 795 590

## Description

La présente invention a pour objet l'utilisation de copolymères comprenant au moins des fonctions polyamides, polyoxyalkylénées, en tant que gélifiants de composés peu polaires ou de tensioactifs, de préférence non ioniques.

S'il existe de nombreuses possibilités de préparer des gels aqueux, les gels de composés peu polaires ou de tensioactifs restent peu développés, bien que beaucoup de domaines puissent être intéressés par l'obtention de tels gels. C'est le cas notamment du domaine de la cosmétique (par exemple les crèmes solaires) ; celui du nettoyage/décapage industriel (traitement de surfaces verticales) ; celui du domaine phytosanitaire (maintien en suspension de matières actives sensibles à l'hydrolyse, par exemple) ; celui des encres d'imprimerie ; celui de la détergence ; celui des travaux publics et du bâtiment ; celui de la papeterie (par exemple, formulation d'anti-mousses destinés à la fabrication de la pâte à papier) ; celui des explosifs (par exemple, gélification d'ergols ou de propergols pour applications militaires et civiles) ou encore celui des fluides hydrauliques.

La présente invention a pour but de proposer un moyen simple et efficace de gélification de milieux peu polaires ou de tensioactifs.

Ainsi, elle a pour objet l'utilisation en tant que gélifiant de composé peu polaire ou de tensioactif non ionique, d'au moins un copolymère séquencé comprenant les motifs suivants :

-X-(R¹)ₘ-(OA)ₙ-X- (I),

et

- [NH- R²- NHCO - R'² - CO]ᵣ- (IIa),

et/ou

- [NH-R³-CO]ₛ- (IIb),

et

-OC-R⁴-CO- (III)

motifs dans lesquels :
□ X correspond à la fonction terminale dudit motif après réaction avec une fonction amine ou acide carboxylique ;
□ R¹ identiques ou non, représentent un radical alkyle, linéaire ou ramifié, comprenant 2 à 4 atomes de carbone ;
□ OA identiques ou non, représentent un radical oxyéthyléné, oxypropyléné, oxybutyléné ou leurs mélanges ;
□ R², R'², R³, R⁴, identiques ou non, représentent :
   - un radical alkyle, linéaire ou ramifié, comprenant 2 à 18 atomes de carbone,
   - un radical aryle comprenant un ou plusieurs noyaux aromatiques, éventuellement substitués,
□ m est égal à 0 ou 1,
□ n est un nombre entier compris entre 4 et 800,
□ r est tel que le nombre de liaisons amides est compris entre 1 et 15, pour chaque motif (I),
□ s est tel que le nombre de liaisons amides est compris entre 1 et 15, pour chaque motif (I),
□ le rapport molaire du nombre de motifs (III) au nombre de motifs (I) est compris entre 0,5/1 et 1,4/1 ;
□ les différents motifs sont liés entre eux au moins par des liaisons amides ;
□ la masse molaire en nombre du copolymère est inférieure à 100000 g/mol.

Mais d'autres caractéristiques apparaîtront plus clairement à la lecture de la description et des exemples qui vont suivre.

Avant de décrire plus précisément le copolymère mis en oeuvre dans l'invention, la nature du composé susceptible d'être gélifié selon l'invention va être donnée.

Ainsi, on entend par composé peu polaire, tout constituant liquide à la température de préparation et/ou d'utilisation de la formulation dont il est l'un des éléments constitutifs.

Par ailleurs, ce liquide, situé dans l'espace de solubilité de HANSEN (Handbook of solubility parameters and other cohesion parameters - Allan F.M. BARTON, CRC Press Inc., 1983 -). présente plus particulièrement les paramètres suivants :
. δP d'interactions Keesom inférieur ou égal à 16,5 (J/cm³)^{1/2}
. δH de liaisons hydrogène inférieur à 10,5 ou égal (J/cm³)^{1/2}
. δD d'interactions London supérieur ou égal à 15 (J/cm³)^{1/2}.

Plus particulièrement, le coefficient δP est compris entre 2 et 16,5 (J/cm³)^{1/2}.

De préférence, le coefficient δP est compris entre 2 et 10,5 (J/cm³)^{1/2}.

Notons que le coefficient δD est habituellement compris entre 15 et 23.

A titre d'exemples non limitatifs de composés peu polaires, on peut citer:
. les tnglycendes d'acides gras saturés ou insaturés ayant au moins 12 atomes de carbone et de préférence de 14 à 20 atomes de carbone ; il peut s'agir de triglycérides de synthese ou de préférence naturels, tels que les huiles végétales du type huile de colza, huile de soja, huile d'arachide, huile de beurre, huile de graine de coton, huile de lin, huile de noix de coco, huile d'olive, huile de palme, huile de pépin de raisin, huile de poisson, huile de ricin, huile de coprah ;
. les esters méthyliques d'acides gras saturés ou insaturés ayant au moins 12 atomes de carbone et de préférence de 14 à 20 atomes de carbone, comme l'oléate de méthyle ;
. les esters d'alkyle en C₁-C₈, aliphatiques ou cycliques, d'acides monocarboxyliques saturés, comme l'acétate de méthyle, l'acétate d'éthyle, l'acétate de cyclohexyle ;
. les composés terpéniques (D-limonène, L-limonène...) ;
. les diesters d'alkyle en C₁-C₄ d'au moins un diacide aliphatique en C₄-C₆. On met en oeuvre plus particulièrement des mélanges d'esters de diacides qui sont des esters dérivés essentiellement des acides adipique, glutarique et succinique, les groupes alkyles de la partie ester étant surtout choisis parmi les groupes méthyle et éthyle, mais pouvant être également propyle, isopropyle, butyle, n-butyle et isobutyle ;
. l'anisole ;
. la n-méthylpyrrolidone ;
. le diméthylsulfoxyde ;
. les cétones comme la cyclopentanone, la méthylisobutylcétone ;
. les polyalkylène glycols, comme le polyéthylène glycol 400, le polypropylène glycol 400.

La présente invention peut être mise en oeuvre pour la gélification d'un composé peu polaire ou d'un mélange de plusieurs d'entre eux.

Les tensioactifs, et plus particulièrement les tensioactifs non ioniques, peuvent de même être gélifiés selon le procédé de la présente invention.

Plus particulièrement, le tensioactif se présente sous la forme d'un liquide à la température de préparation et/ou d'utilisation de la formulation dont il est l'un des éléments constitutifs.

En outre, le tensioactif est de préférence exempt de solvant polaire, mais s'il est présent, la teneur en solvant dans ce tensioactif reste telle qu'elle n'empêche pas la gélification ultérieure dudit tensioactif.

A titre de tensioactif non ionique convenant tout particulièrement à l'invention, on peut citer, sans toutefois avoir l'intention de s'y limiter :
· les alkylphénols polyoxyalkylénés (polyéthoxyéthylénés, polyoxypropylénés, polyoxybutylénés) dont le substituant alkyle est en C₆-C₁₂ et contenant de 5 à 25 motifs oxyalkylènes ; à titre d'exemple, on peut citer les Triton® X-45, X-114, X-100 ou X-102 commercialisés par Rohm & Haas Cy, les lgepal® NP2 à NP17 de Rhodia Chimie ;
· les alcools aliphatiques en C₈-C₂₂ polyoxyalkylénés contenant de 1 à 25 motifs oxyalkylènes (oxyéthylène, oxypropylène) ; à titre d'exemple, on peut citer les Tergitol® 15-S-9, 24-L-6 NMW commercialisés par Union Carbide Corp., Neodol® 45-9, 23-65, 45-7, 45-4 commercialisés par Shell Chemical Cy, Kyro® EOB commercialisé par Procter & Gamble Cy, les Synperonic® A3 à A9 de ICI, les Rhodasurf® IT, DB et B de Rhodia Chimie ;
· les produits résultant de la condensation de l'oxyde d'éthylène et/ou de l'oxyde de propylène avec le propylène glycol, l'éthylène glycol, de masse moléculaire en poids de l'ordre de 2 000 à 10 000, tels les Pluronic® commercialisés par BASF ;
· les amidoamines alcoxylées contenant de 1 à 50, de préférence de 1 à 25, tout particulièrement de 2 à 20 motifs oxyalkylène (oxyéthylène de préférence ;
· les hydrocarbures terpéniques alcoxylés tels que les α- ou β- pinènes éthoxylés et/ou propoxylés, contenant de 1 à 30 motifs oxyéthylène et/ou oxypropylène ; comme notamment ceux décrits dans la demande intemationale WO 96/01245, à laquelle on pourra notamment se référer ;
· les alkylpolyglycosides pouvant être obtenus par condensation (par exemple par catalyse acide) du glucose avec des alcools gras primaires (US-A-3 598 865 ; US 4 565 647 ; EP 132 043 ; EP 132 046 ...) présentant un groupe alkyle en C₄-C₂₀, de préférence en C₈-C₁₈ ainsi qu'un nombre moyen de motifs glucose de l'ordre 0,5 à 3, de préférence de l'ordre de 1,1 à 1,8 par mole d'alkylpolyglycoside (APG) ; on peut mentionner notamment ceux présentant un groupe alkyle en C₈-C₁₄ et en moyenne 1,4 motif glucose par mole ; un groupe alkyle en C₁₂-C₁₄ et en moyenne 1,4 motif glucose par mole ; un groupe alkyle en C₈-C₁₄ et en moyenne 1,5 motif glucose par mole ; un groupe alkyle en C₈-C₁₀ et en moyenne 1,6 motif glucose par mole ; commercialisés respectivement sous les dénominations Glucopon 600 EC®, 600 CSUP®, 650 EC®, 225 CSUP®, par Henkel.

La présente invention permet de gélifier l'un des tensioactifs mentionnés ci-dessus, de même que leurs mélanges.

Le copolymère va maintenant être décrit.

Comme indiqué précédemment, le copolymère comprend des motifs (I) à (III), qui, plus particulièrement, sont répartis de manière aléatoire.

Le copolymère comprend des liaisons amides, des liaisons éther provenant du motif (I), et selon la nature des fonctions réactives du motif (I) éventuellement des liaisons ester et uréthanne .

Par ailleurs, les fonctions terminales de ce copolymère sont des amines, plus particulièrement des amines primaires, des acides carboxyliques et éventuellement des alcools.

Le copolymère comprend au moins un motif (I) de formule suivante :

-X-(R¹)ₘ-(OA)ₙ-X-

formule dans laquelle :
□ X correspond à la fonction terminale dudit motif après réaction avec une fonction amine ou acide carboxylique ;
□ R¹ identiques ou non, représentent un radical alkyle, linéaire ou ramifié, comprenant 2 à 4 atomes de carbone ;
□ OA identiques ou non, représentent un radical oxyéthyléné, oxypropyléné, oxybutyléné ou leurs mélanges ;
□ m est égal à 0 ou 1,
□ n est un nombre entier compris entre 4 et 800.

Selon un mode de réalisation plus particulier de l'invention, le motif (I) du copolymère comprend un enchaînement de radicaux oxyéthylénés, oxypropylénés, ou oxybutylénés, ou une combinaison de deux ou trois de ces motifs, la somme des motifs étant égale à n.

Il est à noter que les copolymères faisant l'objet de l'utilisation selon l'invention, peuvent, en fonction de leur utilisation ultérieure, avoir leur structure adaptée, notamment à travers la nature et le nombre de motifs oxyalkylénés. Ainsi, par exemple, la compatibilité du copolymère avec un composé très peu polaire peut être augmentée en diminuant le nombre de radicaux oxyéthyténés, et/ou en augmentant le nombre de radicaux oxypropylénés, voire oxybutylénés.

De préférence, le nombre de motifs OA est compris entre 4 et 300.

X correspond à la fonction terminale dudit motif après réaction avec une fonction amine ou acide carboxylique. Pour être plus précis, X provient de la réaction de monomère(s) ou de prépolymère(s), qui sont, pour le copolymère faisant l'objet de l'invention, à l'origine du motif (I), avec une fonction amine ou acide carboxylique.

Il est à noter qu'il est avantageux de mettre en oeuvre des prépolymères correspondant au motif (I) obtenus extemporanément, et possédant des fonctions terminales susceptibles de réagir avec des fonctions amines ou acides carboxyliques.

Parmi ces fonctions terminales convenables, on peut citer tout particulièrement les alcools, les amines, les acides carboxyliques, les époxydes, les isocyanates.

Ainsi, dans le cas où X provient de la réaction d'une fonction terminale amine avec un acide carboxylique, c'est-à-dire une fonction amide, X correspond à la fonction suivante :- NH -. Dans le cas où X provient de la réaction d'une fonction terminale alcool avec un acide carboxylique, c'est-à-dire une fonction ester, X correspond à la fonction suivante : - O - ; et ainsi de suite.

Selon un premier mode de réalisation préféré de l'invention, le motif (I) présente un X résultant de la réaction d'une fonction amine avec un acide carboxylique, alors m vaut 1.

Selon ce mode particulier, lorsque le radical OA est un radical oxyéthyléné, le radical R¹ peut contenir 2 à 4 atomes de carbone. Lorsque le radical OA est un radical oxypropyléné ou oxybutyléné, le radical R¹ comprend plus particulièrement 3 ou 4 atomes de carbone, respectivement.

De tels motifs (I) dérivent de diamines polyxyalkylénées. Ces composés sont bien connus de l'homme de l'art, et sont commercialisés notamment sous la marque Jeffamine® (Texaco - Huntsmann).

Selon un deuxième mode de réalisation préféré de l'invention, le motif (I) présente un X résultant de la réaction d'un alcool avec un acide carboxylique, alors m, de préférence, vaut 0.

Les motifs (I) correspondant à cette variante proviennent de polyalkylèneglycols ou de copolymères de polyalkylèneglycols séquences ou statistiques.

Des composés pouvant être utilisés dans la présente invention sont notamment commercialisés sous la marque Pluronic PE® (BASF).

Dans les cas où le motif (I) présente un X résultant de la réaction d'un époxyde, d'un isocyanate avec une amine ou un acide carboxylique, alors m est de préférence égal à 0.

Le copolymère selon l'invention peut comprendre un seul type de motif (I) ou une combinaison de plusieurs d'entre eux, que ces demiers soient différenciés par la nature de leurs motifs X et/ou de leurs motifs OA.

Les seconds types de motifs du copolymères mis en oeuvre dans l'invention sont de formule suivantes :

- [NH- R²- NHCO - R^{2'} - CO]ᵣ - (IIa),

et/ou

- [NH - R³- CO]ₛ- (IIb),

formules dans lesquelles :
□ R² , R'², R³, R⁴, identiques ou non, représentent :
   - un radical alkyle, linéaire ou ramifié, comprenant 2 à 18 atomes de carbone,
   - un radical aryle comprenant un ou plusieurs noyaux aromatiques, éventuellement substitués,
□ r est tel que le nombre de liaisons amides est compris entre 1 et 15, pour chaque motif (I),
□ s est tel que le nombre de liaisons amides est compris entre 1 et 15, pour chaque motif (I).

Plus particulièrement, les radicaux R², R'² et R³, identiques ou différents, représentent des radicaux, linéaires ou ramifiés, comprenant 2 à 12 atomes de carbone et de préférence des radicaux méthylène, éventuellement porteurs d'un ou plusieurs radicaux méthyle.

Selon un mode de réalisation préféré, lesdits radicaux, identiques ou non, sont choisis, notamment, parmi les radicaux divalents éthyle, 1-méthyle- éthyle, propyle, 1-méthyle-propyle, butyle, hexyle, heptyle, octyle, décyle, undécyle, lauryle.

Une autre possibilité est constituée par des radicaux R², R'² et R³ identiques ou différents, représentant des radicaux aryles comprenant un ou plusieurs noyaux aromatiques, éventuellement substitués.

Dans le cas où les radicaux précités ne comprennent qu'un seul noyau aromatique, de préférence à 6 atomes de carbone, les fonctions réactives (acides carboxyliques et/ou amines) se trouvent en position ortho, méta ou para.

Notons que dans le cas où les radicaux précités comprennent plusieurs noyaux aromatiques, de préférence deux noyaux aromatiques, ces derniers peuvent être péricondensés ou liés par des groupes inertes, tels que les liens valentiels simples, un radical alkyle comprenant 1 à 4 atomes de carbone.

Parmi les radicaux comprenant deux noyaux aromatiques, on peut citer tout particulièrement les radicaux napthyles divalents rattachés aux fonctions réactives (acides carboxyliques et/ou amines) par les atomes de carbone 1 et 2, 1 et 4, 1 et 5, 1 et 6, 1 et 7, 2 et 7.

Les valeurs de r et s sont plus particulièrement comprises entre 5 et 10, pour chaque motif (I).

Les motifs (IIa) sont obtenus par la réaction d'une diamine avec un diacide, les motifs (llb) par la réaction d'aminoacides ou de lactames.

De tels motifs peuvent être obtenus in situ, lors de la préparation du copolymère mis en oeuvre dans l'invention, ou bien préparés extemporanément ; l'obtention de ces motifs se faisant conformément à un procédé classique de polyamidification, qui sera décrit en détails dans ce qui va suivre.

Ainsi, selon une variante préférée de l'invention, on utilise, en tant que motifs (IIa) ou (llb) des polyamides, tels que le polyamide 6, le polyamide 10, le polyamide 11, le polyamide 12, le polyamide 6,6, ou un copolymère statistique d'au moins deux d'entre eux, en toutes proportions, de préférence 50/50.

Il est à noter que l'emploi de motifs (IIa) et (llb) qui viennent d'être décrits, présente l'avantage supplémentaire de permettre d'obtenir un copolymère dont le point de fusion n'est pas très élevé, ce qui facilite la préparation du gel, durant laquelle le polymère est fondu.

Quant aux motifs (III), leur formule est la suivante :

-OC-R⁴-CO,

dans laquelle R⁴, identiques ou différents, ont la même signification que celle donnée pour les radicaux R² à R³ précisée ci-dessus. On pourra donc s'y référer.

Les motifs (III) proviennent des diacides correspondants.

Le rapport molaire du nombre de motifs (III) à la somme du nombre des motifs (I) est compris entre 0,5/1 et 1,4/1. Selon un mode de réalisation préféré de l'invention, le nombre de motifs (III) est tel qu'il soit voisin de la stoechiométrie entre le nombre de fonctions amines, carboxyliques, et éventuellement alcools, isocyanate et époxy .

Les copolymères, ou le mélange de copolymères, mis en oeuvre dans l'invention présentent en outre l'avantage d'avoir un point de fusion relativement faible, c'est-à-dire inférieur à environ 190°C, plus particulièrement compris entre 70 et 190°C, de préférence entre 100 et 190°C.

Les copolymères qui viennent d'être décrits peuvent être préparés par réaction d'acides dicarboxyliques, de composés polyoxyalkylénés possédant des fonctions terminales susceptibles de réagir avec des fonctions amines ou acides carboxyliques (sous forme de monomères ou de prépolymères), d'aminoacides ou de lactames, ou encore de polyamides.

On procède en mettant en contact les divers réactifs, de préférence en l'absence de solvant

Cette première étape est généralement réalisée sans chauffage. Cependant dans le cas où l'un ou plusieurs des réactifs se trouve sous une forme solide, l'opération est réalisée à une température au moins égale au point de fusion le plus élevé.

Les divers réactifs sont mis en oeuvre dans des quantités adéquates pour obtenir un copolymère tel que défini plus haut.

Une fois la mise en contact effectuée, la réaction de polymérisation proprement dite est réalisée. Pour ce faire, la température est portée à une valeur généralement comprise entre 100°C et 300°C. Lors de cette étape, l'eau de réaction est évaporée.

Les conditions de pression lors de la réaction de polymérisation peuvent être déterminées sans difficulté par l'homme du métier.

On peut utiliser de manière facultative un catalyseur pour favoriser la réaction de polyamidification, comme par exemple l'acide hypophosphoreux, l'acide phénylphosphinique, l'acide phénylphosphonique ou le phosphite de tris(nonylphényle).

On peut également mettre en oeuvre un catalyseur favorisant la polyestérification si nécessaire. Parmi les catalyseurs utilisables, on peut citer les catalyseurs à base de titane, de zirconium, entre autres, comme par exemple le tétrabutylorthotitanate de titane, le tétrabutylorthozirconate.

Le catalyseur peut représenter de 0 % à 1 % en poids par rapport au poids total des différents monomères, plus particulièrement jusqu'à 0,5 %, et de préférence entre quelques dizaines et quelques centaines de parties par million.

Ainsi que cela a été indiqué auparavant, les copolymères mis en oeuvre dans l'invention ont une masse molaire en nombre inférieure ou égale à 100 000 g/mole, plus particulièrement comprise entre 10 000 et 50 000 g/mole.

Notons que les masses molaires en nombre des copolymères ont été évaluées par chromatographie par exclusion stérique, en employant le polystyrène comme étalon.

Les copolymères sont plus particulièrement utilisés à raison de 0,1 à 15 % en poids par rapport au composé peu polaire ou du tensioactif. De manière avantageuse, la teneur en copolymère est comprise entre 0,5 et 10 % en poids par rapport à la même référence.

Dans le cas d'une gélification d'un composé peu polaire, il est à noter que le copolymère mis en oeuvre dans la présente invention peut être associé à au moins un tensioactif, non ionique ou anionique, afin de rendre auto-émulsionnable ledit composé peu polaire.

Dans un tel cas, le tensioactif est de préférence exempt de solvant polaire, ou en tout cas la teneur en solvant dans ce tensioactif, s'il est présent, doit être telle qu'elle n'empêche pas la gélification ultérieure du mélange copolymère / tensioactif / composé peu polaire.

Parmi les tensioactifs non ioniques convenables, on peut citer :
· les alkylphénols polyoxyalkylénés (polyéthoxyéthylénés, polyoxypropylénés, polyoxybutylénés) dont le substituant alkyle est en C₆-C₁₂ et contenant de 5 à 25 motits oxyalkylènes ; à titre d'exemple, on peut citer les Triton X-45, X-114, X-100 ou X-102 (Rohm & Haas), les Igepal NP2 à NP17 (Rhodia Chimie) ;
· les alcools aliphatiques en C₈-C₂₂ polyoxyalkylénés contenant de 1 à 25 motifs oxyalkylenes (oxyéthyléne, oxypropylène) ; à titre d'exemple, on peut citer les Tergitol 15-S-9, 24-L-6 NMW (Union Carbide Corp.), Neodol 45-9, 23-65, 45-7, 45-4 (Shell Chemical Cy). Kyro EOB (Procter & Gamble Cy), les Synperonic A3 à A9 (ICI), les Rhodasurf IT. DB et B (Rhodia Chimie) ;
· les triglycendes éthoxylés ou éthoxy-propoxylés d'origine végétale ou animale, comme par exemple le saindoux, le suif, l'huile d'arachide, l'huile de beurre, l'huile de graine de coton, l'huile de lin, l'huile d'olive, l'huile de palme, l'huile de pépins de raisin, l'huile de poisson. l'huile de soja, l'huile de ricin, l'huile de colza, l'huile de coprah, l'huile de noix de coco.
· les produits résultant de la condensation de l'oxyde d'éthylène et/ou de l'oxyde de propylene avec le propylène glycol, l'éthylène glycol, de masse moléculaire en poids de l'ordre de 2 000 à 10 000, tels les Pluronic (BASF) ;
· les produits résultant de la condensation de l'oxyde d'éthylène et/ou de l'oxyde de propylene avec l'éthylènediamine, tels les Tetronic (BASF) ;
· les acides gras éthoxylés et/ou propoxylés en C₈-C₁₈ contenant de 5 à 25 motifs éthoxylés et/ou propoxylés ;
· les amides d'acides gras en C₈-C₂₀ contenant de 5 à 30 motifs éthoxylés ;
· les amines éthoxylées contenant de 5 à 30 motifs éthoxylés ;
· les amidoamines alcoxylées contenant de 1 à 50, de préférence de 1 à 25, tout particulièrement de 2 à 20 motifs oxyalkylène (oxyéthytène de préférence ;
· les oxydes d'amines tels que les oxydes d'alkyl C₁₀-C₁₈ diméthylamines, les oxydes d'alkoxy C₈-C₂₂ éthyl dihydroxy éthylamines ;
· les hydrocarbures terpéniques alcoxylés tels que les α- ou β- pinènes éthoxylés et/ou propoxylés, contenant de 1 à 30 motifs oxyéthylène et/ou oxypropylène ; comme ceux décrits dans le brevet WO 96/01245 ;
· les alkylpolyglycosides pouvant être obtenus par condensation (par exemple par catalyse acide) du glucose avec des alcools gras primaires (US-A-3 598 865 ; US 4 565 647 ; EP 132 043 ; EP 132 046 ...) présentant un groupe alkyle en C₄-C₂₀, de préférence en C₈-C₁₈ ainsi qu'un nombre moyen de motifs glucose de l'ordre 0,5 à 3, de préférence de l'ordre de 1,1 à 1,8 par mole d'alkylpolyglycoside (APG) ; on peut mentionner notamment ceux présentant un groupe alkyle en C₈-C₁₄ et en moyenne 1,4 motif glucose par mole ; un groupe alkyle en C₁₂-C₁₄ et en moyenne 1,4 motif glucose par mole ; un groupe alkyle en C₈-C₁₄ et en moyenne 1,5 motif glucose par mole ; un groupe alkyle en C₈-C₁₀ et en moyenne 1,6 motif glucose par mole ; commercialisés respectivement sous les dénominations Glucopon 600 EC®, 600 CSUP®, 650 EC®, 225 CSUP®, (Henkel).

En ce qui conceme les tensioactif anioniques, on met plus particulièrement en oeuvre des tensioactifs qui se présentent sous forme de liquide ou sous forme soluble dans le composé peu polaire. On peut mentionner à titre d'exemple :
· les alkylesters sulfonates de formule R-CH(SO₃M)-COOR', où R représente un radical alkyle en C₈- C₂₀, dé préférence en C₁₀-C₁₆, R' un radical alkyle en C₁-C₆, de préférence en C₁-C₃ et M un cation choisi parmi un métal alcalin ou alcalino-terreux (sodium, potassium, lithium, calcium), un reste ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...) ;
· les alkylsulfates de formule ROSO₃M, où R représente un radical alkyle ou hydroxyalkyle en C₅-C₂₄, de préférence en C₁₀-C₁₈, M représentant un atome d'hydrogène ou un cation tel que défini ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP ;
· les alkylamides sulfates de formule RCONHR'OSO₃M où R représente un radical alkyle en C₂-C₂₂, de préférence en C₆-C₂₀, R' un radical alkyle en C₂-C₃, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;
· les esters phosphates alcoxylés (éthoxylés et/ou propoxylés) dérivant d'alcools aliphatiques, d'alkylphénols ou d'alkylarylphénols ;
· les sels d'acides gras saturés ou insaturés en C₈-C₂₄, de préférence en C₁₄-C₂₀, les alkylbenzènesulfonates en C₉-C₂₀, les alkylsulfonates primaires ou secondaires en C₈-C₂₂, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates ;
· les sophorolipides, tels que ceux sous forme acide ou lactone, dérivés de l'acide 17-hydroxyoctadécénique ;
le cation associé a la même définition que celle indiquée pour M, ou est un atome d'hydrogène.

Dans le cas où un tensioactif est présent, la quantité utilisée est plus particulièrement comprise entre 5 et 20 % en poids par rapport au composé peu polaire.

L'avantage d'introduire un tensioactif dans le mélange copolymère / composé peu polaire est de rendre le gel résultant auto-émulsionnable.

Le copolymère selon l'invention peut de même être mis en oeuvre avec une charge, comme par exemple une charge à structure lamellaire. A titre d'illustration, les smectites (montmorillonite, beidellite, nontronite, hectorite, saponite, ...) peuvent être utilisées.

La teneur en charge varie dans un large domaine. Avantageusement, et quand elle est présente, sa teneur peut représenter jusqu'à 20 % en poids du copolymère.

Cette charge peut être mise en oeuvre de plusieurs façons.

La première consiste à l'utiliser lors de la préparation du copolymère. Cette possibilité présente l'avantage surprenant de faire diminuer le point de fusion du copolymère ainsi obtenu. Ceci peut s'avérer intéressant lors de la mise en oeuvre du copolymère pour la préparation du gel.

La seconde consiste à ajouter la charge lors de l'utilisation du copolymère. Une telle opération permet d'augmenter la dureté du gel résultant.

Bien évidemment, on ne sortirait pas du cadre de la présente invention en combinant ces deux variantes.

L'un des domaines d'application du mélange comprenant le copolymère et le composé peu polaire ou le tensioactif, concerne les formulations destinées au nettoyage, au décapage de peintures et de vernis, sur des surfaces diverses, telles que les métaux par exemple.

L'intérêt de ce mélange selon l'invention est qu'il permet d'obtenir une composition présentant une forte viscosité ce qui rend plus efficace l'opération de nettoyage/décapage par un meilleur "accrochage" de la composition active sur le support à traiter.

Les mélanges selon l'invention peuvent par exemple être utilisés pour le nettoyage/décapage des surfaces verticales.

Un autre domaine d'application du mélange selon l'invention est relatif à celui de la détergence industrielle, pour lequel il permet de disposer d'un moyen de gélifier des solutions comprenant par exemple des composés du type des limonènes.

Il permet de même de gélifier des additifs liquides pour formulations détergentes solides.

Le mélange selon l'invention peut aussi être utilisé dans le domaine phytosanitaire.

Il peut être avantageux de disposer de mélanges gélifiés comprenant une ou plusieurs matières actives liquides, solubilisées ou maintenues en suspension, dans un solvant adéquat, dès l'instant que ces mélanges présentent les paramètres de solubilité compris dans les gammes indiquées ci-dessus.

En effet, de tels mélanges sont stables jusqu'à des températures d'au moins environ 50°C.

Le mélange selon l'invention peut aussi trouver une application dans le domaine des encres d'imprimerie, avec la gélification d'huiles minérales ou végétales entre autres.

Les mélanges selon l'invention sont obtenus en mettant en contact le copolymère avec le composé peu polaire ou le tensioactif, et le cas échéant, les additifs précités.

Cette mise en contact a lieu de préférence à chaud pendant une durée suffisante pour dissoudre ou disperser le (co)polymère. Par exemple, une température d'au moins 90 °C convient à la mise en oeuvre de l'invention. De manière avantageuse, on peut effectuer la dissolution ou la dispersion à une température à laquelle le copolymère se trouve à l'état fondu.

Dans le cas de la gélification de composés peu polaires, il se peut que le point de fusion des copolymères décrits auparavant soit plus élevé que le point éclair desdits composés peu polaires. Par conséquent, l'opération de mise en contact peut avoir lieu de manière préférée sous un courant d'azote.

La durée de mise en contact est plus particulièrement telle que le copolymère soit dissous.

Une fois la dissolution réalisée, le mélange est refroidi sans agitation pour faciliter l'apparition du gel.

Des exemples concrets mais non limitatifs de l'invention vont maintenant être présentés.

### EXEMPLE 1

### 1) préparation du copolymère

Dans un réacteur en verre, sont introduits les réactifs suivants :

| Composé | % poids | Nombre de moles |
|---|---|---|
| Jeffamine® ED 2003 (*) | 76,1 | 1 |
| Acide adipique | 4,9 | 1 |
| Acide amino caproïque | 9,5 | 2,19 |
| Acide amino undécanoïque | 9,5 | 1,43 |
| Catalyseur H₃PO₂ | 500 ppm | |

| | | |
|---|---|---|
| (*) Jeffamine® ED 2003 (Huntsmann) ; Mn = 2276 g/mol ; rapport molaire oxyde d'éthylène (OE) / oxyde de propylène (OP) = 37,5/5,5 ; | | |

Le réacteur est alors purgé (vide/azote) et la température est augmentée jusqu'à 230°C, sous azote. Après maintien une heure à cette température, on applique progressivement, en une demi-heure, un vide de 100 Pa (1 mbar) à 230°C. On maintient de telles conditions pendant 10 minutes.

On obtient un copolymère bloc comprenant en moyenne 4 liaisons amide par bloc polyamide (détermination par RMN). En outre, la masse molaire en nombre est d'environ 46400 g/mol (détermination par chromatographie par exclusion stérique; étalon polystyrène).

### 2) Préparation d'un gel

Le copolymère obtenu précédemment est dissous à chaud (au-delà du point de fusion du copolymère), sous un courant d'azote, dans du Rhodiasolv® RPDE, commercialisé par Rhodia Chimie (mélange d'esters courts d'acides adipique glutarique et succinique). Le copolymère est présent à 1 % en poids par rapport au Rhodiasolv® RPDE.

Une fois la dissolution réalisée, le mélange est refroidi sans agitation pour faciliter l'apparition du gel.

Le gel est stable jusqu'à 50°C

### EXEMPLE 2

### 1) préparation du copolymère

On procède comme dans l'exemple 1, à l'exception du fait que la composition mise en oeuvre est la suivante :

| Composé | % poids | Nombre de moles |
|---|---|---|
| Jeffamine® D 2000 (*) | 66,6 | 1 |
| Acide adipique | 4,85 | 1 |
| Acide amino caproïque | 28,5 | 6,59 |
| Catalyseur H₃PO₂ | 500 ppm | |

| | | |
|---|---|---|
| (*) Jeffamine® D 2000 (Texaco) ; Mn = 2002 g/mol ; polyoxyde de propylène. | | |

On obtient un copolymère bloc comprenant en moyenne 5 liaisons amide par bloc polyamide (détermination par RMN). En outre, la masse molaire en nombre est d'environ 17200 g/mol (détermination par chromatographie par exclusion stérique; étalon polystyrène).

### 2) Préparation d'un gel

Le copolymère obtenu précédemment est dissous à chaud sous un courant d'azote, dans de l'Oléate de Méthyle PHYTOROB® 926-67 commercialisé par NOVANCE. Le copolymère est présent à 1 % en poids par rapport à l'Oléate de Méthyle.

Une fois la dissolution réalisée, le mélange est refroidi sans agitation.

Le gel est stable jusqu'à 50°C

### EXEMPLE 3

### 1) préparation du copolymère avec une charge minérale

On procède comme dans l'exemple 1, à l'exception du fait que la composition mise en oeuvre est la suivante :

| Composé | % poids | Nombre de moles |
|---|---|---|
| Jeffamine® D 2000 (*) | 66,6 | 1 |
| Acide adipique | 4,85 | 1 |
| Acide amino caproïque | 14,3 | 3,3 |
| Acide amino undécanoïque | 14,3 | 2,15 |
| Catalyseur H₃PO₂ | 500 ppm | |
| Montmorillonite (**) | X | |

| | | |
|---|---|---|
| (*) Jeffamine® D 2000 (Texaco) ; Mn = 2002 g/mol ; polyoxyde de propylène. | | |
| (**) Montmorillonite SCPX 1789 de LAPORTE, non traitée. | | |

X représente 0 %, 5 %, 20 % en poids rapporté au poids du copolymère.

On obtient un copolymère bloc comprenant en moyenne 5,5 liaisons amide par bloc polyamide (détermination par RMN).

### 2) Mesure des points de fusion

| Teneur en montmorillonite | Point de fusion |
|---|---|
| 0 % | 127°C |
| 5% | 116°C |
| 20 % | 111°C |

### EXEMPLE 4

Le copolymère obtenu à l'exemple 1 est dissous à chaud (au-delà du point de fusion du copolymère), sous un courant d'azote, dans du PPG 400 (polypropylène glycol de masse molaire en poids de 400 - commercialisé par Dow). Le copolymère est présent à 5 % en poids par rapport au PPG 400.

Une fois la dissolution réalisée, le mélange est refroidi sans agitation pour faciliter l'apparition du gel.

Le gel est stable jusqu'à 50°C

Un résultat similaire est obtenu en mettant en oeuvre du PEG 400 (polyéthylène glycol de masse molaire en poids de 400 - commercialisé par Dow) avec 2 % de copolymère.

### EXEMPLE 5

Le copolymère obtenu à l'exemple 1 est dissous à chaud dans du Synperonic® A7 (alcoool gras en C₁₂-C₁₄ comprenant 7 motifs oxyéthylénés - commercialisé par ICI). Le copolymère est présent à 2 % en poids par rapport au Synperonic® A7.

On obtient un gel une fois la dissolution réalisée et le mélange refroidi sans agitation pour faciliter l'apparition du gel.

### EXEMPLE 6

Le copolymère obtenu à l'exemple 1 est dissous à chaud, dans du nonylphénol 10 OE (Igepal® NP10 - Rhodia Chimie). Le copolymère est présent à 5 % en poids par rapport au nonylphénol.

On obtient un gel une fois la dissolution réalisée et le mélange refroidi sans agitation pour faciliter l'apparition du gel.

### EXEMPLE 7

Le copolymère obtenu à l'exemple 1 est dispersé à chaud dans un alkylpolyglycoside comprenant un motif alkyle en C₁₂-C₁₆ (Plantaren® 1200). Le copolymère est présent à 5 % en poids par rapport au Plantaren.®

On obtient un gel une fois la dispersion réalisée et le mélange refroidi sans agitation pour faciliter l'apparition du gel.

### EXEMPLE 8

Le copolymère obtenu à l'exemple 1 est dissous à chaud dans un nopol contenant 3 motifs oxyde de propylène (OP) et 6,5 motifs d'oxyde d'éthylène (OE). Ce produit est obtenu en mettant en oeuvre l'enseignement de la demande intemationale WO 96/01245

On obtient un gel une fois la dissolution réalisée et le mélange refroidi sans agitation pour faciliter l'apparition du gel.

## Revendications

1. Utilisation en tant que gélifiant de composé peu polaire ou de tensioactif non ionique, d'au moins un copolymère séquence de point de funsion inférieur à environ 190°C comprenant les motifs suivants :
- X - (R¹)ₘ - (OA)ₙ - X - (I),
et
- [NH- R² - NHCO - R'² - CO]ᵣ - (IIa),
et/ou
- [NH - R³ - CO]_{S} - (IIb),
et
- OC - R⁴ - CO - (III)
motifs dans lesquels :
□ X correspond à la fonction terminale dudit motif après réaction avec une fonction amine ou acide carboxylique ;
□ R¹ identiques ou non, représentent un radical alkyle, linéaire ou ramifié, comprenant 2 à 4 atomes de carbone ;
□ OA identiques ou non, représentent un radical oxyéthyléné, oxypropyléné, oxybutyléné ou leurs mélanges ;
□ R² , R'², R³, R⁴, identiques ou non, représentent :
• un radical alkyle, linéaire ou ramifié, comprenant 2 à 18 atomes de carbone,
• un radical aryle comprenant un ou plusieurs noyaux aromatiques, éventuellement substitués,
□ m est égal à 0 ou 1,
□ n est un nombre entier compris entre 4 et 800,
□ r est tel que le nombre de liaisons amides est compris entre 1 et 15, pour chaque motif (I),
□ s est tel que le nombre de liaisons amides est compris entre 1 et 15, pour chaque motif (I),
□ le rapport molaire du nombre de motifs (III) au nombre de motifs (I) est compris entre 0,5/1 et 1,4/1 ;
□ les différents motifs sont liés entre eux au moins par des liaisons amides ;
□ la masse molaire en nombre du copolymère est inférieure à 100000 g/mol.

2. Utilisation selon la revendication précédente, **caractérisée en ce que** les motifs (I) du copolymère comprennent un enchaînement de radicaux oxyéthylénés, ou oxypropylénés, ou oxyéthylénés/oxypropylénés, la somme des motifs étant égale à n.

3. Utilisation selon l'une des revendications précédentes, **caractérisée en ce que** les radicaux R², R'², R³ et R⁴, identiques ou différents, représentent des radicaux, linéaires ou ramifiés, comprenant 2 à 12 atomes de carbone et de préférence des radicaux méthylène, éventuellement porteurs d'un ou plusieurs radicaux méthyle.

4. Utilisation selon la revendication précédente, **caractérisé en ce que** les radicaux R², R'², R³ et R⁴, identiques ou différents, sont choisis parmi :
□ les radicaux éthyle, 1-méthyle- éthyle, propyle, 1-méthyle-propyle, butyle, hexyle, heptyle, octyle, décyle, undécyle, lauryle.

5. Utilisation selon l'une quelconque des revendications précédentes, **caractérisée en ce que** radicaux R², R'², R³ et R⁴, identiques ou différents, représentent des radicaux aryles comprenant un ou plusieurs noyaux aromatiques, éventuellement substitués.

6. Utilisation selon la revendication précédente, **caractérisée en ce que** radicaux R², R'², R³ et R⁴, identiques ou différents, comprennent :
* un noyau aromatique, les fonctions réactives (amines ou acides carboxyliques) se trouvant en position ortho, méta ou para,
* deux noyaux aromatiques, liés par des groupes inertes, ou péricondensés comme les radicaux napthyles divalents, les fonctions réactives (amines ou acides carboxyliques) se trouvant sur les atomes de carbone 1 et 2, 1 et 4, 1 et 5, 1 et 6, 1 et 7, 2 et 7.

7. Utilisation selon l'une quelconque des revendications 1 à 4, **caractérisée en ce que** les motifs (IIa) ou (llb) sont choisis parmi tels que le polyamide 6, le polyamide 10, le polyamide 11, le polyamide 12, le polyamide 6,6, ou un copolymère statistique d'au moins deux d'entre eux, en toutes proportions, de préférence 50/50.

8. Utilisation selon l'une quelconque des revendications précédentes, **caractérisée en ce que** r et s, identiques ou différents, sont tels que le nombre de liaisons amides est compris entre 5 et 10, pour chaque motif (I).

9. Utilisation selon l'une quelconque des revendications précédentes, **caractérisée en ce que** la masse moléculaire en nombre du copolymère est comprise entre 10000 et 50000 g/mol.

10. Utilisation selon l'une quelconque des revendications précédentes, **caractérisée en ce que** le composé peu polaire est situé dans l'espace de solubilité de HANSEN, et présente les paramètres suivants :
. δP d'interactions Keesom inférieur ou égal à 16,5 (J/cm³)^{1/2}
. δH de liaisons hydrogène inférieur à 10,5 ou égal (J/cm³)^{1/2}
. δD d'interactions London supérieur ou égal à 15 (J/cm³)^{1/2}.

11. Utilisation selon l'une quelconque des revendications précédentes, **caractérisée en ce que** le tensioactif non ionique est choisi parmi :
· les alkylphénols polyoxyalkylénés (polyéthoxyéthylénés, polyoxypropylénés, polyoxybutylénés) dont le substituant alkyle est en C₆-C₁₂ et contenant de 5 à 25 motifs oxyalkylènes ;
· les alcools aliphatiques en C₈-C₂₂ polyoxyalkylénés contenant de 1 à 25 motifs oxyalkylènes (oxyéthylène, oxypropylène) ;
· les produits résultant de la condensation de l'oxyde d'éthylène et/ou de l'oxyde de propylène avec le propylène glycol, l'éthylène glycol ;
· les acides gras éthoxylés et/ou propoxylés en C₈-C₁₈ contenant de 5 à 25 motifs éthoxylés et/ou propoxylés ;
· les amidoamines alcoxylées contenant de 1 à 50 motifs oxyalkylénés ;
· les hydrocarbures terpéniques alcoxylés tels que les α- ou β- pinènes éthoxylés et/ou propoxylés, contenant de 1 à 30 motifs oxyéthylène et/ou oxypropylène ;
· les alkylpolyglycosides pouvant être obtenus par condensation du glucose avec des alcools gras primaires présentant un groupe alkyle en C₄-C₂₀, ainsi qu'un nombre moyen de motifs glucose de l'ordre 0,5 à 3 par mole d'alkylpolyglycoside.

12. Utilisation selon l'une quelconque des revendications précédentes, **caractérisée en ce que** la quantité de copolymère par rapport au composé peu polaire ou au tensioactif non ionique est comprise entre 0,1 et 15 % en poids, de préférence entre 0,5 et 10 % en poids.

13. Utilisation selon l'une quelconque des revendications précédentes, **caractérisée en ce que**, dans le cas de la gélification de composé peu polaire, le copolymère est associé à un tensioactif non ionique ou anionique.

14. Utilisation selon la revendication précédente, **caractérisé en ce que** la quantité de tensioactif non ionique ou anionique, par rapport au composé peu polaire est comprise entre 5 et 20 % en poids.

15. Utilisation selon l'une quelconque des revendications précédentes, **caractérisée en ce que** le copolymère est associé à une charge à structure lamellaire.

16. Utilisation selon la revendication précédente, **caractérisé en ce que** la quantité de charge représente jusqu'à 20 % en poids du copolymère.

17. Utilisation selon l'une quelconque des revendications 15 ou 16, **caractérisée en ce que** la charge est introduite lors de la préparation du copolymère et/ou lors de l'utilisation de ce dernier.

18. Utilisation selon l'une quelconque des revendications 1 à 17, **caractérisée en ce que** le copolymère et le composé peu polaire ou le tensioactif non ionique entrant dans la composition de formulations destinées au nettoyage de métaux.

19. Utilisation selon l'une quelconque des revendications 1 à 17, **caractérisée en ce que** le copolymère et le composé peu polaire ou le tensioactif non ionique entrant dans la composition de formulations détergentes, utilisables dans le domaine industriel.

20. Utilisation selon l'une quelconque des revendications 1 à 17, **caractérisée en ce que** le copolymère et le composé peu polaire ou le tensioactif non ionique entrant dans la composition de formulations destinées au décapage de peintures, de vernis.

21. Utilisation selon l'une des revendications 15 à 17, **caractérisée en ce que** le copolymère et le composé peu polaire ou le tensioactif non ionique entrant dans la composition de formulations destinées au nettoyage ou au décapage de surfaces verticales.

22. Utilisation selon l'une quelconque des revendications 1 à 17, **caractérisée en ce que** le copolymère et le composé peu polaire ou le tensioactif non ionique entrant dans la composition de formulations destinées au traitement des plantes.

23. Utilisation selon l'une quelconque des revendications 1 à 17, **caractérisée en ce que** le copolymère et le composé peu polaire ou le tensioactif non ionique entrant dans la composition de formulations utilisées dans le domaine des encres d'imprimerie.

## Patentansprüche

1. Verwendung mindestens eines Blockcopolymers mit einem Schmelzpunkt unterhalb von etwa 190 °C als Gelbildner für eine wenig polare Verbindung oder ein nichtionisches Tensid, wobei das Blockcopolymer die folgenden Einheiten aufweist:
-X-(R¹)ₘ-(OA)ₙ-X- (I)
und
- [NH - R²- NHCO - R'²- CO]ᵣ- (IIa)
und/oder
- [NH-R³-CO]_{S}- (IIb)
und
-OC-R⁴-CO- (III),
wobei in diesen Einheiten:
- X einer terminalen Funktion der Einheit nach Reaktion mit einer Aminoder Carbonsäurefunktion entspricht;
- R¹, identisch oder nicht, einen linearen oder verzweigten Alkylrest mit 2 bis 4 Kohlenstoffatomen darstellt;
- OA, identisch oder nicht, einen Oxyethylen-, Oxypropylen- oder Oxybutylen-Rest oder deren Mischungen darstellt;
- R², R'², R³ und R⁴, identisch oder nicht, darstellen:
• einen linearen oder verzweigten Alkylrest mit 2 bis 18 Kohlenstoffatomen,
• einen Arylrest mit einem oder mehreren, gegebenenfalls substituierten aromatischen Ringen
- m gleich 0 oder 1 ist;
- n eine ganze Zahl zwischen 4 und 800 ist;
- r derart ist, daß die Zahl der Amidbindungen für jede Einheit (I) zwischen 1 und 15 liegt;
- s derart ist, daß die Zahl der Amidbindungen für jede Einheit (I) zwischen 1 und 15 liegt;
- das Molverhältnis der Anzahl der Einheiten (III) zur Anzahl der Einheiten (I) zwischen 0,5/1 und 1,4/1 liegt;
- die verschiedenen Einheiten untereinander mindestens durch Amidbindungen verbunden sind;
- die zahlenmäßige Molekularmasse des Copolymers weniger als 100.000 g/mol beträgt.

2. Verwendung nach dem vorhergehenden Anspruch, **dadurch gekennzeichnet, daß** die Einheiten (I) des Copolymers eine Verkettung von Oxyethylenoder Oxypropylen- oder Oxyethylen/Oxypropylen-Resten umfassen, wobei die Summe der Einheiten gleich n ist.

3. Verwendung nach einem der vorhergehenden Ansprüche, **dadurch gekennzeichnet, daß** die Reste R², R'², R³ und R⁴, identisch oder verschieden, lineare oder verzweigte Reste mit 2 bis 12 Kohlenstoffatomen, vorzugsweise Methylenreste, darstellen, die gegebenenfalls ein oder mehrere Methylreste tragen.

4. Verwendung nach dem vorhergehenden Anspruch, **dadurch gekennzeichnet, daß** die Reste R², R'², R³ und R⁴, identisch oder verschieden, ausgewählt sind aus Ethyl-, 1-Methylethyl-, Propyl-, 1-Methylpropyl-, Butyl-, Hexyl-, Heptyl-, Octyl-, Decyl-, Undecyl- und Laurylresten.

5. Verwendung nach einem der vorhergehenden Ansprüche, **dadurch gekennzeichnet, daß** die Reste R², R'², R³ und R⁴, identisch oder verschieden, Arylreste darstellen, die ein oder mehrere aromatische Ringe umfassen, die gegebenenfalls substituiert sind.

6. Verwendung nach dem vorhergehenden Anspruch, **dadurch gekennzeichnet, daß** die Reste R², R'², R³ und R⁴, identisch oder verschieden, umfassen:
- einen aromatischen Kern, wobei die reaktiven Funktionen (Amin- oder Carbonsäurefunktionen) in ortho-, meta- oder para-Position befindlich sind;
- zwei aromatische Kerne, die über zwei inerte Gruppen verbunden sind oder perikondensiert sind, wie zweiwertige Naphthylreste, wobei die reaktiven Funktionen (Amin- oder Carbonsäurefunktionen) an den Kohlenstoffatomen 1 und 2, 1 und 4, 1 und 5, 1 und 6, 1 und 7 bzw. 2 und 7 befindlich sind.

7. Verwendung nach einem der Ansprüche 1 bis 4, **dadurch gekennzeichnet, daß** die Einheiten (IIa) oder (IIb) ausgewählt sind aus solchen Einheiten, wie Polyamid-6, Polyamid-10, Polyamid-11, Polyamid-12, Polyamid-6,6 oder einem statistischen Copolymer von mindestens zwei dieser Einheiten beliebigen Mengenverhältnissen, vorzugsweise 50/50.

8. Verwendung nach einem der vorhergehenden Ansprüche, **dadurch gekennzeichnet, daß** r und s, identisch oder verschieden, derart sind, daß die Anzahl der Amidbindungen zwischen 5 und 10, bezogen auf jede Einheit (I), liegt.

9. Verwendung nach einem der vorhergehenden Ansprüche, **dadurch gekennzeichnet, daß** die zahlenmäßige Molekularmasse des Copolymers 10.000 bis 50.000 g/mol beträgt.

10. Verwendung nach einem der vorhergehenden Ansprüche, **dadurch gekennzeichnet, daß** die wenig polare Verbindung im Bereich der HANSEN-Löslichkeit befindlich ist und die folgenden Parameter aufweist:
- δP der Keesom-Wechselwirkungen kleiner oder gleich 16,5 (J/cm³)^{1/2},
- δH der Wasserstoffbindungen kleiner oder gleich 10,5 (J/cm³)^{1/2},
- δD der London-Wechselwirkungen größer oder gleich 15 (J/cm³)^{1/2}.

11. Verwendung nach einem der vorhergehenden Ansprüche, **dadurch gekennzeichnet, daß** das nichtionische Tensid ausgewählt ist aus:
- polyoxyalkylenierten (polyethoxyethylenierten, polyoxypropylenierten bzw. polyoxybutylenierten) Alkylphenolen, deren Alkylsubstituent ein C₆-C₁₂-Alkylsubstituent ist und 5 bis 25 Oxyalkyleneinheiten enthält;
- polyoxyalkylenierten aliphatischen C₈-C₂₂-Alkoholen mit 1 bis 25 Oxyalkyleneinheiten (Oxyethylen- bzw. Oxypropyleneinheiten);
- Produkten aus der Kondensation von Ethylenoxid und/oder Propylenoxid mit Propylenglykol bzw. Ethylenglykol;
- ethoxylierten und/oder propoxylierten C₈-C₁₈-Fettsäuren mit 5 bis 25 ethoxylierten und/oder propoxylierten Einheiten;
- alkoxylierten Amidoaminen mit 1 bis 50 Oxyalkyleneinheiten;
- alkoxylierten terpenischen Kohlenwasserstoffen, wie ethoxylierten und/oder propoxylierten α- oder β-Pinenen, mit 1 bis 30 Oxyethylen- und/oder Oxypropyleneinheiten;
- Alkylpolyglykosiden, die erhältlich sind durch Kondensation von Glucose mit primären Fettalkoholen mit einer C₄-C₂₀-Alkylgruppe sowie einer mittleren Anzahl an Glucoseeinheiten in der Größenordnung von 0,5 bis 3 pro Mol Alkylpolyglycosid.

12. Verwendung nach einem der vorhergehenden Ansprüche, **dadurch gekennzeichnet, daß** die Menge an Copolymer, bezogen auf die wenig polare Verbindung oder das nichtionische Tensid, 0,1 bis 15 Gew.-%, vorzugsweise 0,5 bis 10 Gew.-%, beträgt.

13. Verwendung nach einem der vorhergehenden Ansprüche, **dadurch gekennzeichnet, daß** im Fall der Gelbildung der wenig polaren Verbindung das Copolymer gemeinsam mit einem nichtionischen oder anionischen Tensid verwendet wird.

14. Verwendung nach dem vorhergehenden Anspruch, **dadurch gekennzeichnet, daß** die Menge an nichtionischem oder anionischem Tensid, bezogen auf die wenig polare Verbindung, 5 bis 20 Gew.-% beträgt.

15. Verwendung nach einem der vorhergehenden Ansprüche, **dadurch gekennzeichnet, daß** das Copolymer zusammen mit einem Füllstoff mit lamellenartiger Struktur eingesetzt wird.

16. Verwendung nach dem vorhergehenden Anspruch, **dadurch gekennzeichnet, daß** die Menge an Füllstoff bis zu 20 Gew.-% des Copolymers darstellt.

17. Verwendung nach Anspruch 15 oder 16, **dadurch gekennzeichnet, daß** der Füllstoff bei der Herstellung des Copolymers und/oder bei der Verwendung des letzteren zugegeben wird.

18. Verwendung nach einem der Ansprüche 1 bis 17, **dadurch gekennzeichnet, daß** das Copolymer und die wenig polare Verbindung oder das nichtionische Tensid in die Zusammensetzung von Formulierungen Eingang finden, die zur Reinigung von Metallen bestimmt sind.

19. Verwendung nach einem der Ansprüche 1 bis 17, **dadurch gekennzeichnet, daß** das Copolymer und die wenig polare Verbindung oder das nichtionische Tensid in die Zusammensetzung von Formulierungen von Detergentien (Reinigungsmitteln) Eingang finden, die im industriellen Bereich verwendet werden können.

20. Verwendung nach einem der Ansprüche 1 bis 17, **dadurch gekennzeichnet, daß** das Copolymer und die wenig polare Verbindung oder das nichtionische Tensid in die Zusammensetzung von Formulierungen Eingang finden, die zum Beizen (Entfernen) von Farben und Lacken bestimmt.

21. Verwendung nach einem der Ansprüche 15 bis 17, **dadurch gekennzeichnet, daß** das Copolymer und die wenig polare Verbindung oder das nichtionische Tensid in die Zusammensetzung von Formulierungen Eingang finden, die zur Reinigung oder zum Beizen vertikaler Oberflächen bestimmt sind.

22. Verwendung nach einem der Ansprüche 1 bis 17, **dadurch gekennzeichnet, daß** das Copolymer und die wenig polare Verbindung oder das nichtionische Tensid in die Zusammensetzung von Formulierungen Eingang finden, die zur Behandlung von Pflanzen bestimmt sind.

23. Vorwendung nach einem der Ansprüche 1 bis 17, **dadurch gekennzeichnet, daß** das Copolymer und die wenig polare Verbindung oder das nichtionische Tensid in die Zusammensetzung von Formulierungen Eingang finden, die im Bereich von Drackertinten verwendet werden.

## Claims

1. Use as a gelling agent for a compound with low polarity or a nonionic surfactant, of at least one block copolymer having a melting point of less than about 190°C and comprising the following units:
-X-(R¹)ₘ-(OA)ₙ-X- (I),
and
-[NH-R²-NHCO-R'²-CO]ᵣ- (IIa),
and/or
-[NH-R³-CO]ₛ- (IIb),
and
-OC-R⁴-CO- (III)
in which units:
□ X corresponds to the end function of the said unit after reaction with an amine or carboxylic acid function;
□ R¹, which may be identical or different, represent a linear or branched alkyl radical comprising 2 to 4 carbon atoms;
□ OA, which may be identical or different, represent an oxyethylenated, oxypropylenated or oxybutylenated radical, or mixtures thereof;
□ R², R'², R³ and R⁴, which may be identical or different, represent:
• a linear or branched alkyl radical comprising 2 to 18 carbon atoms,
• an aryl radical comprising one or more optionally substituted aromatic nuclei,
□ m is equal to 0 or 1,
□ n is an integer between 4 and 800,
□ r is such that the number of amide bonds is between 1 and 15 per unit (I),
□ s is such that the number of amide bonds is between 1 and 15 per unit (I),
□ the molar ratio of the number of units (III) to the number of units (I) is between 0.5/1 and 1.4/1;
□ the various units are linked together at least by means of amide bonds;
□ the number-average molar mass of the copolymer is less than 100 000 g/mol.

2. Use according to the preceding claim, **characterized in that** the units (I) of the copolymer comprise a sequence of oxyethylenated, oxypropylenated or oxyethylenated/oxypropylenated radicals, the sum of the units being equal to n.

3. Use according to either of the preceding claims, **characterized in that** the radicals R², R'², R³ and R⁴, which may be identical or different, represent linear or branched radicals comprising 2 to 12 carbon atoms, and preferably methylene radicals, optionally bearing one or more methyl radicals.

4. Use according to the preceding claim, **characterized in that** the radicals R², R'², R³ and R⁴, which may be identical or different, are chosen from:
0 ethyl, 1-methylethyl, propyl, 1-methylpropyl, butyl, hexyl, heptyl, octyl, decyl, undecyl and lauryl radicals.

5. Use according to any one of the preceding claims, **characterized in that** the radicals R², R'², R³ and R⁴, which may be identical or different, represent aryl radicals comprising one or more optionally substituted aromatic nuclei.

6. Use according to the preceding claim, **characterized in that** the radicals R², R'², R³ and R⁴, which may be identical or different, comprise:
* an aromatic nucleus, the reactive functions (amines or carboxylic acids) being in an ortho, meta or para position,
* two aromatic nuclei, linked via inert groups, or peri-fused, for instance divalent naphthyl radicals, the reactive functions (amines or carboxylic acids) being on the carbon atoms 1 and 2, 1 and 4, 1 and 5, 1 and 6, 1 and 7 or 2 and 7.

7. Use according to any one of Claims 1 to 4, **characterized in that** the units (IIa) or (IIb) are chosen from polyamide 6, polyamide 10, polyamide 11, polyamide 12, polyamide 6,6 or a random copolymer of at least two such polyamides, in all proportions, preferably 50/50.

8. Use according to any one of the preceding claims, **characterized in that** r and s, which may be identical or different, are such that the number of amide bonds is between 5 and 10 per unit (I).

9. Use according to any one of the preceding claims, **characterized in that** the number-average molecular mass of the copolymer is between 10 000 and 50 000 g/mol.

10. Use according to any one of the preceding claims, **characterized in that** the compound with low polarity is in the Hansen solubility space, and has the following parameters:
· δP of Keesom interactions of less than or equal to 16.5 (J/cm³)^{1/2}
· δH of hydrogen bonds of less than or equal to 10.5 (J/cm³)^{1/2}
· δD of London interactions of greater than or equal to 15 (J/cm³)^{1/2}.

11. Use according to any one of the preceding claims, **characterized in that** the nonionic surfactant is chosen from:
· polyoxyalkylenated (polyethoxyethylenated, polyoxypropylenated or polyoxybutylenated) alkylphenols in which the alkyl substituent is C₆-C₁₂ and containing from 5 to 25 oxyalkylene units;
· polyoxyalkylenated C₈-C₂₂ aliphatic alcohols containing from 1 to 25 oxyalkylene (oxyethylene or oxypropylene) units;
· products resulting from the condensation of ethylene oxide and/or propylene oxide with propylene glycol or ethylene glycol;·
· ethoxylated and/or propoxylated C₈-C₁₈ fatty acids containing from 5 to 25 ethoxylated and/or propoxylated units;
· alkoxylated amido amines containing from 1 to 50 oxyalkylenated units;
· alkoxylated terpenic hydrocarbons such as ethoxylated and/or propoxylated α- or β-pinenes, containing from 1 to 30 oxyethylene and/or oxypropylene units;
· alkylpolyglycosides which may be obtained by condensation of glucose with primary fatty alcohols containing a C₄-C₂₀ alkyl group and also an average number of glucose units of about from 0.5 to 3 per mole of alkylpolyglycoside.

12. Use according to any one of the preceding claims, **characterized in that** the amount of copolymer relative to the compound with low polarity or the nonionic surfactant is between 0.1% and 15% by weight and preferably between 0.5% and 10% by weight.

13. Use according to any one of the preceding claims, **characterized in that**, in the case of gelation of a compound with low polarity, the copolymer is combined with a nonionic or anionic surfactant.

14. Use according to the preceding claim, **characterized in that** the amount of nonionic or anionic surfactant relative to the compound with low polarity is between 5% and 20% by weight.

15. Use according to any one of the preceding claims, **characterized in that** the copolymer is combined with a filler of lamellar structure.

16. Use according to the preceding claim, **characterized in that** the amount of filler represents up to 20% by weight of the copolymer.

17. Use according to either of Claims 15 and 16, **characterized in that** the filler is introduced during the preparation of the copolymer and/or during the use of the said copolymer.

18. Use according to any one of Claims 1 to 17, **characterized in that** the copolymer and the compound with low polarity or the nonionic surfactant form part of the composition of formulations intended for cleaning metals.

19. Use according to any one of Claims 1 to 17, **characterized in that** the copolymer and the compound with low polarity or the nonionic surfactant form part of the composition of detergent formulations which may be used in the industrial field.

20. Use according to any one of Claims 1 to 17, **characterized in that** the copolymer and the compound with low polarity or the nonionic surfactant form part of the composition of formulations intended for stripping paints and varnishes.

21. Use according to any one of Claims 1 to 17, **characterized in that** the copolymer and the compound with low polarity or the nonionic surfactant form part of the composition of formulations intended for cleaning or stripping vertical surfaces.

22. Use according to any one of Claims 1 to 17, **characterized in that** the copolymer and the compound with low polarity or the nonionic surfactant form part of the composition of formulations intended for treating plants.

23. Use according to any one of Claims 1 to 17, **characterized in that** the copolymer and the compound with low polarity or the nonionic surfactant form part of the composition of formulations used in the field of printing inks.
